# EUROPÄISCHE PATENTSCHRIFT

(11) **EP 2 722 150 B1**
(45) Veröffentlichungstag und Bekanntmachung des Hinweises auf die Patenterteilung: **28.12.2016**
(21) Anmeldenummer: 13189398.4
(22) Anmeldetag: 18.10.2013
(51) Int. Cl.: B29C 49/42, B29C 49/06, B29C 49/12, B29C 49/58, B29C 49/78, B29C 49/48

(54) **Vorrichtung und Verfahren zum Expandieren von Vorformlingen zu Behältnissen**
Apparatus and method for expanding performs into containers
Dispositif et procédé d'expansion de préformes pour former des récipients

(30) Priorität: 22.10.2012 DE 102012110071
(43) Veröffentlichungstag der Anmeldung: 23.04.2014
(73) Patentinhaber: Krones AG, 93073 Neutraubling (DE)
(72) Erfinder: Bielmeier, Heinrich, 93073 Neutraubling (DE)
(74) Vertreter: Bittner, Bernhard

(56) Entgegenhaltungen:
- WO-A1-96/25285
- WO-A2-2013/004657
- DE-A1-102009 019 008

## Beschreibung

Die vorliegende Erfindung bezieht sich auf eine Vorrichtung und ein Verfahren zum Expandieren von Vorformlingen zu Behältnissen innerhalb einer Blasform mittels eines unter Druck befindlichen pneumatischen Mediums, gemäß den Oberbegriffen der Patentansprüche 1 und 8.

Vorrichtungen und Verfahren zum Expandieren von Behältnissen finden beispielsweise in der Herstellungsindustrie von Getränkebehältnissen Anwendung, wobei mittels entsprechender Behandlungsanlagen unter anderem vornehmlich aus einem aus Kunststoff hergestellten Vorformling innerhalb einer Blasform ein entsprechend ebenfalls aus Kunststoff bestehendes Behältnis aufgeblasen bzw. expandiert wird.

Dazu wird ein entsprechender Vorformling in einen Innenbereich einer meist zweiteilig ausgestalteten Blasform eingebracht, welche in deren Innenbereich zumindest eine Kavität aufweist, die für die Formgebung des späteren expandierten Behältnisses dient. Vornehmlich umschließt die Blasform den Vorformling vollumfänglich, zumindest um dessen unteren Bereich, wobei der Mündungsbereich des Vorformlings, welcher ein entsprechend angeformtes bzw. eingeschnittenes Innen- oder auch Außengewinde aufweist, zumindest teilweise aus der Blasform herausragen kann oder zumindest nicht innerhalb dem Bereich der Kavität der Blasform eingebracht ist, so dass eine Expansion und insbesondere eine Deformierung des Mündungsbereiches des Vorformlings während dessen Expansionsvorgangs vermieden wird.

Aus der WO 2013/004657 A2 ist eine Blasmaschine mit Druckzylinder und Kraftausgleich für den Kolbenkompressor bekannt. Dabei wird ein Teil der auftretenden Kompressionskraft kompensiert, wobei eine Blaseinheit einen Druckkolben und einen Druckzylinder umfasst.

Die DE 10 2009 019 008 A1 beschreibt ein Verfahren und eine Vorrichtung zur Blasformung von Behältern.

Mittels einer insbesondere auf einen Mündungsbereich des Vorformlings aufsetzbaren Blasdüse, durch welche ein unter Druck befindliches pneumatisches bzw. gasförmiges, fließfähiges Medium, wie ein Sterilisationsgas oder auch Luft in den Innenbereich der Blasform und demnach in den Innenbereich des zu expandierenden Behältnisses bzw. des zu expandierenden Vorforrmlings eingebracht wird, erfolgt ein Aufblasen bzw. ein Streckblasen des Vorformlings zu einem expandierten Behältnis.

Bevorzugt wird dabei zusätzlich eine Reckstange von einem Einlass der Blasform, welcher sich vorzugsweise im Bereich des Mündungsbereiches des Vorformlings befindet, bis zu einem Bodenbereich der Blasform und dementsprechend des sich kontinuierlich expandierenden Behältnisses bewegt, wobei hierzu - je nach Positionierung bzw. Lagerung der Blasform - die Bewegung im Wesentlichen entlang einer Längsachse des Behältnisses und folglich im Wesentlichen in vertikale bzw. senkrechter Richtung zur Horizontalebene erfolgt.

Es ist jedoch auch möglich, dass sich die Blasform (inklusive der Blasdüse) mit dem entsprechend zu expandierenden Vorformling in Richtung der Reckstange und/oder der Blasdüse bewegt, so dass durch die Bewegung der Blasform selbst, welche vergleichbar zur Bewegung der Reckstange im Wesentlichen in vertikaler bzw. senkrechter Richtung zur Horizontalebene erfolgt, demnach die Reckstande durch den Innenbereich des zu expandierenden Vorformlings bewegt wird, so dass die eingebrachte Druckluft im Wesentlichen gleichmäßig auf die Innenbereiche des Vorformlings aufgebracht werden kann, wodurch eine zur Expansion des Vorformlings erforderliche Deformierung des Wandungs- und Bodenbereiches verursacht wird.

Es ist jedoch auch denkbar, dass sich sowohl die Reckstange und/oder die Blasdüse wie auch die Blasform selbst mit jeweils definierten Geschwindigkeiten während des Expansionsvorganges des Vorformlings aufeinander zu und/oder voneinander weg bewegen.

Der Expansionsvorgang des Vorformlings zu einem Behältnis ist nur ein Behandlungsvorgang des Vorformlings oder auch des Behältnisses selbst von einer Vielzahl möglicher Behandlungsvorgänge. Demnach kann innerhalb einer gesamten Anlagen zum Behandeln von Behältnissen ein Vorformling mittels einem Vorwärmen, Erwärmen, Desinfizieren, Trocknen und/oder Expandieren bzw. Aufblasen bzw. Streckblasen behandelt werden, während ein expandiertes Behältnisses beispielsweise mit den Behandlungsschritten: Desinfizieren, Trocknen, Befüllen, Etikettieren, Verschließen mit Behältnisverschlüssen und/oder Verpacken behandelt werden kann.

Die zur Expansion benötigten Blasformen sind vorzugsweise auf einem Transportelement, wie z.B. einem Transportrad oder Sternrad im Wesentlichen identisch zueinander beabstandet angeordnet und werden folglich durch die Drehung des Rades um dessen zentrale Drehachse auch entsprechend um diese Drehachse mit einer definierten Geschwindigkeit bewegt.

Damit werden auch die Vorformlinge entlang eines vorgebbaren Transportpfades, der insbesondere senkrecht zu der Bewegungsrichtung der Blasdüse und/oder der Reckstange und/oder der Blasform steht, transportiert.

Bevorzugt werden die zu expandierenden Vorformlinge bzw. Behältnisse mit zumindest einer weiteren Transporteinrichtung, nämlich einer Zuführtransporteinrichtung der Transporteinrichtung der Blasformen zugeführt, wobei diese Zuführtransporteinrichtung der zu expandierenden Vorformlinge beispielsweise ein Transportband oder ebenfalls ein Transportrad ist. Dementsprechend werden die expandierten Behältnisse vorzugsweise mittels zumindest einer entsprechenden Abführtransporteinrichtung von der Blasformtransporteinrichtung übernommen und beispielsweise einer nachfolgenden Bearbeitungsstation, wie z.B. einer Desinfektionsanlage oder einer Befüllanlage zum Befüllen des Behältnisses usw. zugeführt. In den Übergabebereichen der Zuführtransporteinrichtung und der Blasformtransporteinrichtung bzw. der Blasformtransporteinrichtung und der Abführtransporteinrichtung werden die zu expandierenden Behältnisse übergeben.

Während des Expansionsvorganges des zu expandierenden Vorformlings innerhalb der Blasform werden hohe Blasdrücke von beispielsweise ca. 35 bis 40 bar eingesetzt, um insbesondere gewährleisten zu können, dass der Kunststoff des Vorformlings bzw. die Wandung des Vorformlings derart expandiert bzw. deformiert wird, dass dieser in alle definierten Bereiche der Kavität der Blasform eingebracht bzw. eingepresst wird, so dass ein in definierte Weise expandiertes Behältnis erzeugt werden kann. Der dazu erforderliche Blasdruck hängt dabei u.a. von der Zusammensetzung des Kunststoffes, der Erwärmung des Vorformlings, der Wandungsstärke des Vorformlings usw. ab.

Die Erzeugung der zur Expansion des Vorformlings erforderlichen Blasluft bzw. Druckluft ist bekannterweise sehr energieaufwendig, insbesondere auch aufgrund der Abwärme, welche im Kompressor entsteht, der die Blasluft auf einen definierten Druck komprimiert. Die entstandene Abwärme wird bei Hochdruckkompressoren zumeist über einen entsprechend angeordneten Kühler an die Außenumgebung der Anlage abgeführt, um beispielsweise ein Überhitzen des Kompressors und damit eine Beschädigung dessen zu vermeiden. Demnach ist es die Aufgabe der vorliegenden Erfindung eine Vorrichtung und ein Verfahren zur Verfügung zu stellen, bei welchen die zum Komprimieren der Blasluft bzw. der Luft bzw. des pneumatischen Mediums aufgewendete Energie zu einem möglichst großen Anteil bei einem dem Expansionsvorgang nachfolgenden Entspannungsvorgang wieder zurückgewonnen werden kann.

Diese Aufgabe löst die vorliegende Erfindung mittels einer Vorrichtung gemäß Anspruch 1 und einem Verfahren gemäß Anspruch 8.

Vorteilhafte Ausführungsformen und Weiterbildungen sind Gegenstand der Unteransprüche.

Die erfindungsgemäße Vorrichtung zum Expandieren von Vorformlingen zu Behältnissen innerhalb einer Blasform mittels eines unter Druck befindlichen pneumatischen Mediums weist insbesondere eine Verdichterkolbeneinrichtung zum Verdichten des pneumatischem Mediums auf, welche mit der Blasform in Strömungsverbindung steht, um einen Volumenstrom des pneumatischen Mediums in einen Innenbereich der Blasform einzubringen.

Die Verdichterkolbeneinrichtung, welche hierbei vornehmlich einen Verdichtungsraum bzw. eine Druckkammer, innerhalb welcher das pneumatische Medium verdichtet wird, und mindestens ein Kolbenelement zum Verdichten des pneumatischen Mediums innerhalb des Verdichtungsraumes aufweist, ist vornehmlich direkt bzw. unmittelbar oder auch mittelbar über entsprechende Verbindungsleitungen zum Leiten der Druckluft mit der Blasform verbunden, um die komprimierte Blasluft bzw. das komprimierte pneumatische Medium vornehmlich ohne Kühlung in den Innenbereich der Blasform und damit in den Innenbereich des Vorformling einzupressen, so dass durch den direkten Übergang des komprimierten pneumatischen Mediums von der Verdichterkolbeneinrichtung zu der Blasform zumindest nur ein geringfügiger Anteil an Wärme an die Umgebung abgegeben wird, wodurch hierbei schon eine Energieeinsparung im Vergleich zu bekannten Blasverfahren erzielt wird.

Damit ist bevorzugt die Verdichterkolbeneinrichtung direkt oder zumindest indirekt über entsprechende Verbindungsleitungen an den jeweiligen Blasstationen angeordnet und es sind bevorzugt eine Vielzahl von derartigen Verdichterkolbeneinrichtungen vorgesehen. Vorzugsweise ist pro Umformungs- bzw. Blasstation jeweils eine Verdichterkolbeneinrichtung vorgesehen.

Des Weiteren weist die erfindungsgemäße Vorrichtung eine durch ein hydraulisches Medium aktivierbare Aktoreinrichtung auf, welche mit zumindest einem Element der Verdichterkolbeneinrichtung wechselwirkt, um während eines Expansionsvorganges des Behältnisses die Verdichterkolbeneinrichtung zur Verdichtung des pneumatischen Mediums anzutreiben und um während eines dem Expansionsvorgang zeitlich nachfolgenden Entspannungsvorgangs aufgrund des zurückfließenden Volumenstroms des pneumatischen Mediums in die Verdichterkolbeneinrichtung selbst angetrieben zu werden.

Dabei kann die Aktoreinrichtung bevorzugt auch zumindest ein Abschnitt bzw. ein Bestandteil der Verdichterkolbeneinrichtung und insbesondere zumindest ein Bestandteil des Kolbenelementes der Verdichterkolbeneinrichtung sein. Es ist jedoch auch denkbar, dass die Aktoreinrichtung und die Verdichterkolbeneinrichtung zwei zueinander unterschiedliche Einrichtungen darstellen, welche derart beispielsweise mechanisch oder auch signalübertragungstechnisch miteinander verbunden sind, dass durch eine Bewegung der Aktoreinrichtung eine Bewegung der Verdichterkolbeneinrichtung und insbesondere des Kolbenelementes der Verdichterkolbeneinrichtung bzw. durch eine Bewegung der Verdichterkolbeneinrichtung und insbesondere des Kolbenelementes der Verdichterkolbeneinrichtung auch eine Bewegung der Aktoreinrichtung ermöglicht wird.

Das pneumatische Medium ist bevorzugt ein gasförmiges Medium, wie Druckluft oder ein komprimierbares Gas, wie ein Sterilisationsgas oder ähnliches.

Die Aktoreinrichtung selbst weist ein Aktorkolbenelement und einen Aktormediumraum auf, innerhalb welchem vornehmlich ein hydraulisches Medium eingebracht wird, um das Aktorkolbenelement zu bewegen. Durch die Bewegung des Aktorkolbenelementes wird auch das mit diesem Aktorkolbenelement in Wirkverbindung stehende Kolbenelement der Verdichterkolbeneinrichtung bewegt, so dass während eines Expansionsvorganges des zu expandierenden Behältnisses das Kolbenelement der Verdichterkolbeneinrichtung ein in dem Verdichtungsraum befindliches pneumatisches Medium komprimiert, welches dann an ein Blasdüse (einer Blasform) bzw. eine Blasform übertragen wird.

Es ist jedoch auch denkbar, dass die Aktoreinrichtung oder zumindest ein Bestandteil der Aktoreinrichtung ein elektronisches Signal von beispielsweise einer Steuerungseinrichtung empfängt und in entsprechende mechanische Bewegungen umsetzt, um dadurch die Verdichterkolbeneinrichtung anzusteuern bzw. anzutreiben.

In einer bevorzugten Ausführungsform ist zumindest ein ein hydraulisches Medium aufweisendes Vorratsbehältnis über wenigstens eine Verbindungsleitung mit der Aktoreinrichtung verbunden, um der Aktoreinrichtung zumindest zeitweise und zumindest teilweise das hydraulische Medium zur Verfügung zu stellen.

Das hydraulische Medium ist dabei vorzugsweise ein flüssiges und insbesondere fließfähiges Medium, wie Wasser, eine wässrige Lösung oder ein Schmiermittel, wie Öl oder ähnliches.

Es ist auch denkbar, dass die Vorrichtung insgesamt zwei oder mehr Vorratsbehältnisse aufweist, um das hydraulische Medium zu speichern und über die Verbindungsleitungen zum Transportieren des hydraulischen Mediums an die Aktoreinrichtung zu übergeben. Hierbei wird vorzugsweise immer nur eines der Vorratsbehältnisse über entsprechende Ventile geöffnet, um der Aktoreinrichtung das hydraulische Medium zur Verfügung stellen zu können. In einer weiteren bevorzugten Ausführungsform steht zumindest eine Pumpeneinrichtung mit dem Vorratsbehältnis in Wirkverbindung, um zumindest zeitweise einen Transport des hydraulischen Mediums aus dem Vorratsbehältnis zu der Aktoreinrichtung zu bewirken.

In diesem Falle ist beispielsweise zumindest eine Antriebsmaschine mit der Pumpeneinrichtung wirkverbunden, um die Pumpeneinrichtung anzutreiben und/oder von einer aktivierten Pumpeneinrichtung angetrieben oder zumindest entlastet zu werden.

Demzufolge ist die Antriebsmaschine, welche vorzugsweise wechselweise als ein elektrischer Antriebsmotor und als ein elektrischer Antriebsgenerator wirkt, bevorzugt über eine Welle im Wesentlichen unmittelbar und/oder über Kupplungseinrichtungen, wie z.B. ineinander greifenden Zahnrädern, welche an entsprechende Wellen der Antriebsmaschine und der Pumpeneinrichtung angeordnet sind, im Wesentlichen mittelbar mit der Pumpeneinrichtung wirkverbunden, so dass eine Drehbewegung des Rotors der Antriebseinrichtung eine Drehbewegung des Rotors der Pumpeneinrichtung bewirkt, um ein Pumpen des hydraulischen Mediums aus einem der Vorratsbehältnisse durch die Verbindungsleitungen in Richtung der Aktoreinrichtung zu bewirken.

In einer weiteren bevorzugten Ausführungsform ist eine Steuerungseinrichtung mit der Antriebsmaschine und/oder zumindest einer zwischen dem Vorratsbehältnis und der Aktoreinrichtung angeordneten Ventileinrichtung signalübertragungstechnisch verbunden, um die Antriebsmaschine und/oder die Ventileinrichtung zumindest zeitweise bedarfsgerecht anzusteuern. Bevorzugt handelt es sich bei dieser Steuerungseinrichtung um eine Regelungseinrichtung, d.h. es ist vorteilhaft ein Regelkreis vorhanden.

Demnach ist es denkbar. dass eine Ventileinrichtung im Wesentlichen zeitgleich mit einer Antriebsmaschine aktiviert wird, um einen Durchfluss eines Volumenstroms aus hydraulischem Medium aus dem zumindest einen Vorrastbehältnis in Richtung der Aktoreinrichtung zu ermöglichen, sofern die Antriebsmaschine als Antriebsmotor wirkt und die Pumpeneinrichtung ansteuert. Demzufolge kann die Ventileinrichtung geschlossen werden, wenn weder ein Expansionsvorgang noch ein Entspannungsvorgang stattfindet, d.h., insbesondere, wenn keine Behandlung eines Behältnisses erfolgt. Die Ventileinrichtung ist auch während des Entspannungsvorgangs geöffnet, d.h. nachdem das Behältnis expandiert wurde und die in die Blasform eingepresste Druckluft wieder aus dieser entweicht. Dabei wird das aus der Blasform entweichende pneumatische Medium zurück an die Verdichterkolbeneinrichtung und insbesondere in den Verdichtungsraum der Verdichterkolbeneinrichtung geführt, in welchem sich das pneumatische Medium ausbreitet und folglich das Kolbenelement aus dem Verdichtungsraum heraus bewegt. Vornehmlich ist das Kolbenelement mit keiner mechanischen Kraft beaufschlagt und kann demnach im Wesentlichen ungestört von dem sich im Verdichtungsraum ausbreitenden zurückfließenden pneumatischen Medium bewegt werden.

Durch die Bewegung des Kolbenelementes wird vorzugsweise auch die Aktoreinrichtung aktiviert und insbesondere das Aktorkolbenelement derart bewegt, dass sich ein in dem Aktormediumraum befindliches hydraulisches Medium aus diesem Raum heraus bewegt, und über die Verbindungleitungen und die geöffneten Ventileinrichtungen in Richtung des Vorrastbehältnisses, aus welchem das hydraulische Medium während des Expansionsvorganges entnommen wurde, transportiert wird. Dabei durchfließt das hydraulische Medium auch derart die Pumpeneinrichtung, dass diese durch den Volumenstrom des zurückfließenden hydraulischen Mediums angeregt bzw. aktiviert wird, wobei folglich auch eine mit der Pumpeneinrichtung in Wirkverbindung stehende Antriebsmaschine, die nun als Antriebsgenerator wirkt, angetrieben wird.

Des Weiteren wird folglich auch ein Verfahren zum Expandieren von Vorformlingen zu Behältnissen innerhalb einer Blasform mittels eines unter Druck befindlichen pneumatischen Mediums beansprucht, gemäß welchem während eines Expansionsvorganges zum Expandieren des Behältnisses eine Verdichterkolbeneinrichtung zum Verdichten des pneumatischen Mediums durch eine mit einem hydraulischen Medium betriebene und mit zumindest einem Element der Verdichterkolbeneinrichtung wechselwirkende Aktoreinrichtung angesteuert wird, um das pneumatische Medium in einen Innenbereich der Blasform zu transportieren und bei welchem während eines dem Expansionsvorgang nachfolgenden Entspannungsvorgangs das pneumatische Medium in die Verdichterkolbeneinrichtung zurückgeführt wird, wodurch die Aktoreinrichtung zu einer Rückführung des hydraulischen Mediums veranlasst wird.

In einer bevorzugten Ausführungsform wird dabei vornehmlich während des Entspannungsvorgangs das hydraulische bzw. flüssige und bevorzugt fließfähige Medium, welches beispielsweise ein Sterilisationsmedium, Wasser, eine wässrige Lösung oder ein Öl ist, über wenigstens eine Verbindungsleitung einer Pumpeneinrichtung zugeführt, welche in Wirkverbindung mit einer Antriebsmaschine steht, so dass durch einen Antrieb der Pumpeneinrichtung mittels dem Volumenstrom des zurückfließenden hydraulischen Mediums auch die antriebsmaschine in Form eines Antriebsgenerators betrieben wird.

Das heißt, dass demnach vorzugsweise die durch einen Volumenstrom des durchfließenden hydraulischen Mediums aktivierte Pumpeneinrichtung die Antriebmaschine als Antriebsgenerator zur Erzeugung von elektrischer Energie antreibt und/oder das Fluid in einen unter Druck stehenden Behälter fördert.

Demzufolge ist die Antriebsmaschine, welche vornehmlich eine elektrische Antriebsmaschine ist, die als Antriebsmotor oder auch als Antriebsgenerator fungieren kann, vorzugsweise mit einem elektrischen Stromkreis und insbesondere mit einem elektrischen Zwischenkreis, welcher vorzugsweise zumindest einen Kondensator oder ein vergleichbares Speicherelement zum Speichern elektrischer Energie aufweist, verbunden. Folglich wird die durch die Antriebsmaschine erzeugte elektrische Energie während eines Entspannungsvorganges in den elektrischen Stromkreis und vornehmlich in den Zwischenkreis des elektrischen Stromkreises eingespeist, wodurch beispielsweise der Kondensator aufgeladen werden kann. Diese eingespeiste elektrische Energie steht zumindest teilweise und zumindest zeitweise während eines Expansionsvorganges beispielsweise eines weiteren zu expandierenden Vorformlings der elektrischen Antriebsmaschine wieder zur Verfügung, um diese in Form eines Antriebsmotors wiederrum derart anzutreiben bzw. zu aktivieren, dass der Rotor der Antriebsmaschine den Rotor der Pumpeneinrichtung antreibt, um eine Entnahme des hydraulischen Mediums aus einem Vorratsbehältnis sowie das Leiten des hydraulischen Mediums von dem Vorratsbehältnis zu der Aktoreinrichtung zu bewirken.

In einer weiteren bevorzugten Ausführungsform weisen die einzelnen erfindungsgemäßen Vorrichtungen einen gemeinsamen Stromkreis auf, so dass sich die Energieströme, d.h. die Ströme der von der Antriebsmaschine in Form eines elektrischen Antriebsgenerators erzeugte elektrische Energie der vorzugsweise nebeneinander in Reihe angeordneten erfindungsgemäßen Vorrichtungen im Wesentlichen ausgleichen, wobei eine derartige Anordnung vornehmlich für Rundläufer mit einer Vielzahl von Blasstationen und demnach einer Vielzahl von erfindungsgemäßen Vorrichtungen, wobei bevorzugt jeder Blasstation eine eigene erfindungsgemäße Vorrichtung zugeordnet ist, vorteilhaft ist.

Demzufolge wird durch die in Reihe angeordneten und entsprechend auch mit dem Stromnetz bzw. Stromkreis verschaltenen erfindungsgemäßen Vorrichtungen im Wesentlichen kontinuierlich auch elektrische Energie, nicht nur aus dem Zwischenkreis des Stromkreises entnommen, sondern diesem auch zugeführt. Dabei sind die Behältnisbehandlungsvorgänge und insbesondere der Vorgang des Expandierens des Vorformlings zu einem Behältnis derart miteinander bzw. aufeinander abgestimmt bzw. zeitverzögert, dass während beispielsweise eine erste erfindungsgemäße Vorrichtung elektrische Energie aus dem Stromkreis bezieht, um beispielsweise einen Expansionsvorgang zu beginnen, eine zweite erfindungsgemäße Vorrichtung beispielsweise bereits am Ende des Expansionsvorganges selbst ist bzw. insbesondere kurz vor Einleitung des nachfolgenden Entspannungsvorganges steht, so dass diese zweite erfindungsgemäße Vorrichtung weder elektrische Energie aus dem Stromkreis beziehen muss, noch elektrische Energie dem Stromkreis zuführt, während beispielsweise eine dritte erfindungsgemäße Vorrichtung 10 sich bereits relativ am Ende des Entspannungsvorganges befindet und im Wesentlichen zeitgleich mit dem Beginn des Expansionsvorganges der ersten Vorrichtung den Entspannungsvorgang und damit ein Einspeisen von elektrischer Energie in das Stromnetz bzw. den Stromkreis abgeschlossen hat.

Dank der Einspeisung von elektrischer Energie, erzeugt durch einen Antriebsgenerator, welcher zumindest mittelbar über den zurückfließenden Volumenstrom des hydraulischen Mediums angetrieben wird, erfolgt eine Energierückgewinnung, so dass zumindest ein Großteil der während des Expansionsvorganges benötigten elektrischen Energie wieder in den Zwischenkreis eingespeist werden kann.

Bei einer weiteren vorteilhaften Ausführungsform weist die Vorrichtung ein elektrisches Speichermittel, insbesondere zum Speichern von von der Antriebsmaschine erzeugter elektrischer Energie auf. Bei diesem Speichermittel kann es sich beispielsweise um ein Batterie oder einen Kondensator handeln. Dieses Speichermittel kann dabei in einen Zwischenkreis integriert sein.

In einer weiteren bevorzugten Ausführungsform steuert zumindest eine Steuerungseinrichtung die Antriebsmaschine und/oder zumindest eine zwischen zumindest einem Vorratsbehältnis zum Speichern des hydraulischen Mediums und der Aktoreinrichtung angeordnete Ventileinrichtung an, um während des Expansionsvorganges ein Abführen des hydraulischen Mediums aus dem Vorratsbehältnis zu der Aktoreinrichtung und während des Entspannungsvorgangs von der Aktoreinrichtung zu dem Vorratsbehältnis zu ermöglichen.

Demzufolge ist die Steuerungseinrichtung, welche beispielsweise kabellos oder über entsprechende Verbindungskabel mit der Antriebsmaschine und/oder der Ventileinrichtung verbunden sein kann, derart signalübertragungstechnisch mit der Antriebsmaschine und vorzugsweise auch mit der Ventileinrichtung verbunden, dass während eines Expansionsvorganges vornehmlich die Antriebsmaschine als Antriebsmotor von der Steuerung aktiviert wird, während die Ventileinrichtung geöffnet ist, so dass ein Durchfließen des hydraulischen Mediums aus dem Vorratsbehältnis in Richtung der Aktoreinrichtung erfolgen kann. Auch während des Entspannungsvorgangs ist die Ventileinrichtung vornehmlich geöffnet, während die Antriebsmaschine vorzugsweise aufgrund der Signalübertragung zwischen der Steuerungseinrichtung und der Antriebsmaschine als Antriebsgenerator arbeitet, so dass ein Volumenstrom des rückfließenden hydraulischen Mediums die Pumpeneinrichtung und dadurch auch die mit der Pumpeneinrichtung in Wirkverbindung - bevorzugt über eine Welle - stehende Antriebsmaschine antreiben kann, so dass durch die Antriebsmaschine bzw. den Antriebsgenerator elektrische Energie erzeugt wird.

Es wird darauf hingewiesen, dass die vorliegende Erfindung nicht nur bei Blasformmaschinen anwendbar ist, sondern allgemein bei Anwendungen, bei denen Druckluft erzeugt wird und diese insbesondere auch wieder zeitweise aus einem mit der Druckluft beaufschlagten Raum (oder einem anderen Raum) ausströmt.

Die Erfindung betrifft daher auch allgemein eine Vorrichtung zum Erzeugen eines unter Druck befindlichen pneumatischen Mediums, wobei eine Verdichterkolbeneinrichtung zum Verdichten des pneumatischem Mediums mit einem mit dem gasförmigen Medium zu beaufschlagenden Raum in Strömungsverbindung steht, um einen Volumenstrom des pneumatischen Mediums in einen Innenbereich dieses Raums einzubringen, und eine durch ein hydraulisches Medium aktivierbare Aktoreinrichtung mit zumindest einem Element der Verdichterkolbeneinrichtung wechselwirkt, um während der Beaufschlagung dieses Raums die Verdichterkolbeneinrichtung zur Verdichtung des pneumatischen Mediums anzutreiben und um während eines dem Expansionsvorgang zeitlich nachfolgenden Entspannungsvorgangs des Raums aufgrund des zurückfließenden Volumenstroms des pneumatischen Mediums in die Verdichterkolbeneinrichtung selbst angetrieben zu werden.

Weitere Vorteile, Ziele und Eigenschaften der vorliegenden Erfindung werden anhand nachfolgender Beschreibung anliegender Zeichnung erläutert, in welcher beispielhaft unter anderem Ausführungsformen der erfindungsgemäßen Vorrichtung und deren Wirkungsweise dargestellt wird.

Komponenten, welche in den Figuren wenigstens im Wesentlichen hinsichtlich ihrer Funktion übereinstimmen, können hierbei mit gleichen Bezugszeichen gekennzeichnet sein, wobei diese Komponenten nicht in allen Figuren gekennzeichnet und erläutert sein müssen.

In den Figuren zeigen:
- Fig.1: eine Prinzipskizze einer Ausführungsform einer Blasform zum Expandieren von Vorformlingen zu Behältnissen;
- Fig.2a: eine Prinzipskizze einer ersten Ausführungsform der erfindungsgemäßen Vorrichtung zu Beginn eines ersten Betriebszustandes;
- Fig.2b: eine Prinzipskizze der in Fig.2a gezeigten Ausführungsform der erfindungsgemäßen Vorrichtung am Ende des ersten Betriebszustandes;
- Fig.3: eine Prinzipskizze einer Anordnung mehrerer der in Fig.2a und Fig.2b gezeigten ersten Ausführungsformen der erfindungsgemäßen Vorrichtung; und
- Fig.4: eine Prinzipskizze einer zweiten Ausführungsform der erfindungsgemäßen Vorrichtung.

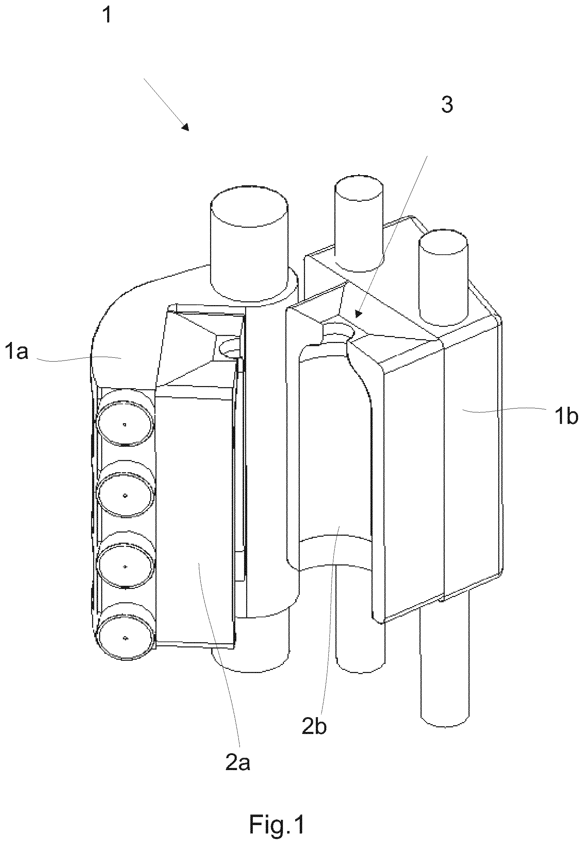

Fig.1 zeigt eine Prinzipskizze einer Ausführungsform einer Blasform 1 zum Expandieren von Vorformlingen (hier nicht gezeigt) zu Behältnissen (hier nicht gezeigt). Die Blasform 1 weist dazu beispielsweise zwei Blasformhälften 1a, 1 b auf, die wiederum jeweils eine Kavität 2a bzw. 2b aufweisen, innerhalb welcher das zu expandierende Behältnis bzw. der Vorformling zumindest zeitweise und zumindest teilweise aufgenommen wird. Zumindest während des Expansionsvorganges sind die beiden Blasformhälften 1 a und 1 b derart miteinander verschlossen, dass vorzugsweise lediglich über einen oberen Bereich 3 der Blasform 1, welcher den Mündungsbereich des hier nicht gezeigten Vorformlings umschließt, eine Druckluft in das Innere der Blasform 1 und insbesondere in den in den Kavitäten 2a, 2b eingebrachten Vorformling eingepresst werden kann.

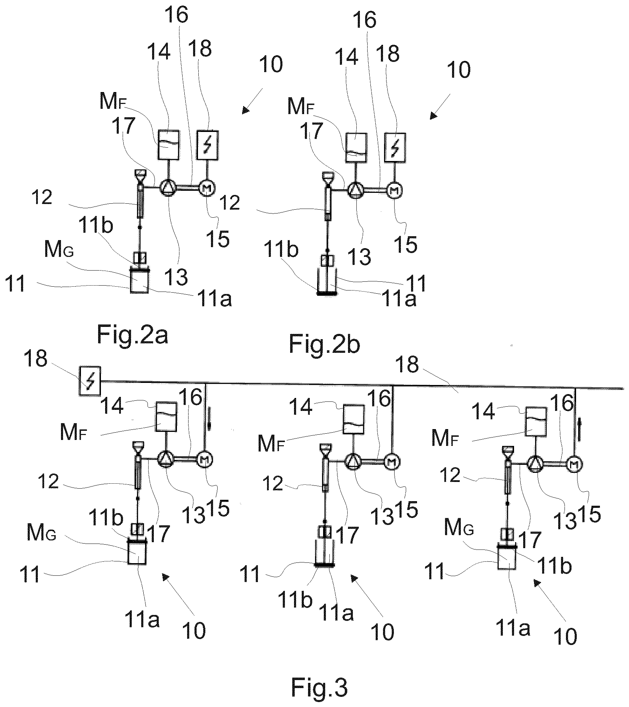

In der Fig.2a ist eine Prinzipskizze einer ersten Ausführungsform der erfindungsgemäßen Vorrichtung 10 zu Beginn eines ersten Betriebszustandes und insbesondere eine Stellung der Verdichterkolbeneinrichtung 11 in einer Anfangs- bzw. Startstellung des Expansionsvorgangs des Behältnisses bzw. eines Komprimiervorgangs zum Komprimieren des pneumatischen Mediums gezeigt. Es wird davon ausgegangen, dass eine Expansion eines hier nicht gezeigten Vorformlings erfolgen soll. Auch ist in der Fig.2a insbesondere aus Gründen der Übersichtlichkeit keine Blasform zum Expandieren der Behältnisse gezeigt.

Ein mit der Antriebsmaschine 15 verbundener Stromkreis 18, welcher insbesondere auch einen Zwischenkreis mit einem darin angeordneten Kondensator aufweisen kann (hier nicht gezeigt) liefert der Antriebsmaschine 15, welche vorzugsweise eine mit elektrischer Energie antreibbare Antriebsmaschine 15 ist, elektrische Energie, um diese Antriebsmaschine 15 in Form eines Antriebsmotors und insbesondere eines elektrischen Antriebsmotors anzutreiben bzw. zu betreiben.

Die mit der Antriebsmaschine 15 in Wirkverbindung und insbesondere über eine Welle 16 mit der Antriebsmaschine 15 verbundene Pumpeneinrichtung 13 wird durch die Antriebsmaschine 15 und vornehmlich durch die Rotordrehung der Antriebsmaschine 15 derart angetrieben, dass ein in zumindest einem Vorratsbehältnis 14 befindliches hydraulisches bzw. flüssiges Medium M_{F} aus dem Vorratsbehältnis 14 in Richtung einer Verbindungsleitung 17 zum Transportieren des hydraulischen Mediums M_{F} transportiert wird und von dort aus in Richtung einer Aktoreinrichtung 12.

Die durch den Volumenstrom des hydraulischen Mediums M_{F} angetriebene Aktoreinrichtung 12 befindet sich wiederum in Wirkverbindung mit einer Verdichterkolbeneinrichtung 11, welche einen Verdichtungsraum 11 a sowie ein Kolbenelement 11 b aufweist, wobei das Kolbenelement 11 b zumindest teilweise in den Verdichtungsraum 11a hineinragt und innerhalb dessen bewegt werden kann.

Durch die vornehmliche mechanische Bewegung zumindest eines Elementes bzw. eines Bestandteils der Aktoreinrichtung 12 wird insbesondere das Kolbenelement 11 b in Richtung des Bodens des Verdichtungsraumes 11 a bewegt, so dass das sich innerhalb des Verdichtungsraumes 11 a befindliche pneumatische bzw. gasförmige Medium M_{G} komprimiert wird und in Richtung einer hier nicht gezeigten Blasform entweicht bzw. geführt wird, um eine Expansion bzw. ein Aufblasen und Deformieren des Vorformlings zu einem Behältnis zu bewirken.

In der Fig.2b ist eine Prinzipskizze der bereits in Fig.2a gezeigten Ausführungsform der erfindungsgemäßen Vorrichtung 10, jedoch nun am Ende des ersten Betriebszustandes und damit während oder zeitlich kurz vor Beginn eines zweiten Betriebszustandes gezeigt, wobei insbesondere die Endstellung der Verdichterkolbeneinrichtung 11 nach dem Expansionsvorgang des Behältnisses bzw. nach dem Komprimiervorgang des pneumatischen Mediums gezeigt ist. D.h., dass nach dem Expandieren bzw. Aufblasen des Vorformlings zu einem Behältnis und demzufolge nach dem Expansionsvorgang sich ein Entspannungsvorgang anschließt, bei welchen das zur Expansion des Behältnisses verwendete pneumatische Medium, nicht wie aus dem allgemeinen Stand der Technik bekannt, an die Außenumgebung abgegeben wird; sondern aus der Blasform (hier nicht gezeigt) in den Verdichtungsraum 11a der Verdichterkolbeneinrichtung 11 zurückgeführt wird. D.h., dass sich der Verdichtungsraum 11 a wieder derart mit dem pneumatischen Medium füllt, dass das Kolbenelement 11 b, welches sich vornehmlich nun an unteren Ende und damit am Bodenbereich des Verdichtungsraumes 11 a befindet, wieder nach oben, d.h. entlang des Verdichtungsraumes 11 a in vorzugsweise vertikaler Richtung gedrückt wird, so dass durch die Bewegung des Kolbenelementes 11 b auch eine Bewegung der Aktoreinrichtung 12 ausgelöst wird.

Vorzugsweise sind das Kolbenelement 11 b und zumindest ein Bestandteil oder Bauteil der Aktoreinrichtung 12 derart miteinander gekoppelt, dass durch eine Bewegung des Kolbenelementes 11 b auch das Element bzw. der Bestandteil der Aktoreinrichtung 12 und vornehmlich ein Aktorkolbenelement (hier nicht gezeigt) derart bewegt wird, dass das sich in beispielsweise einem Aktormediumraum (hier nicht gezeigt) befindliche hydraulische Medium M_{F} durch die Bewegung des Aktorkolbenelementes aus dem Aktormediumraum hinaus in die angrenzenden und mit dem Aktormediumraum verbundenen Verbindungsleitungen 17 zum Transportieren des hydraulischen Mediums M_{F} gedrückt wird.

Der zurückfließende Volumenstrom des hydraulischen Mediums M_{F} fließt dann über die Verbindungsleitung 17 zur Pumpeneinrichtung 13, welche folglich von dem Volumenstrom in Bewegung versetzt wird und demnach vorzugsweise als Fluidmotor arbeitet. Daraufhin wird auch die Antriebsmaschine 15, welche vorzugsweise mit der Pumpeneinrichtung 13 gekoppelt ist durch beispielsweise die Rotationsbewegung der Pumpeneinrichtung 13 bzw. des Fluidmotors angetrieben und arbeitet folglich als elektrischer Antriebsgenerator, welcher entsprechende elektrische Leistung an den angrenzenden elektrischen Stromkreis 18 und insbesondere einen darin befindlichen Zwischenkreis mit entsprechendem Kondensator abgibt.

Anstatt des Kondensators kann jedoch auch beispielsweise ein Akkumulator angeordnet sein, welcher durch die entsprechend von dem Antriebsgenerator erzeugte elektrische Energie aufgeladen wird.

Fig.3 zeigt eine Prinzipskizze einer Anordnung mehrerer der in Fig.2a und Fig.2b gezeigten ersten Ausführungsformen der erfindungsgemäßen Vorrichtung 10, wobei die einzelnen Vorrichtungen nebeneinander angeordnet sind und einen gemeinsamen Stromkreis 18 aufweisen. Ansonsten entspricht der Aufbau der einzelnen Vorrichtung im Wesentlichen dem Aufbau des in den Figuren 2a bzw. 2b gezeigten Aufbaus der Vorrichtung 10.

Vorzugsweise ist jede Vorrichtung 10 einer eigenen Blasform (hier nicht gezeigt) zugeordnet, so dass jede Blasform unabhängig zu einer anderen sich jedoch ebenfalls auf der gleichen Transporteinrichtung befindlichen Blasform einen Blasvorgang zum Expandieren des zu expandierenden Behältnisses beginnen kann.

Fig.3 verdeutlicht, dass sich die Energieströme, d.h. die Ströme der von der Antriebsmaschine 15 in Form eines elektrischen Antriebsgenerators erzeugte elektrische Energie der nebeneinander in Reihe angeordneten Vorrichtungen 10 im Wesentlichen ausgleichen, wobei eine derartig in Fig.3 aufgezeigte Anordnung vornehmlich für Rundläufer mit einer Vielzahl von Blasstationen vorteilhaft ist.

Demzufolge wird durch die in Reihe angeordneten und entsprechend auch mit dem Stromnetz 18 bzw. Stromkreis 18 verschaltenen Vorrichtungen 10 im Wesentlichen kontinuierlich auch elektrische Energie, nicht nur aus dem Zwischenkreis des Stromkreises 18 entnommen, sondern diesem auch zugeführt. Dabei sind die Behältnisbehandlungsvorgänge und insbesondere der Vorgang des Expandierens des Vorformlings zu einem Behältnis derart miteinander bzw. aufeinander abgestimmt bzw. zeitverzögert, dass während beispielsweise eine erste Vorrichtung 10 (linke Vorrichtung der Figur 3) elektrische Energie aus dem Stromkreis 18 bezieht, um einen Expansionsvorgang zu beginnen, eine zweite Vorrichtung 10 (mittlere Vorrichtung der Figur 3) bereits am Ende des Expansionsvorganges selbst ist und insbesondere kurz vor Einleitung des nachfolgenden Entspannungsvorganges steht, so dass diese zweite Vorrichtung weder elektrische Energie aus dem Stromkreis 18 beziehen muss, noch elektrische Energie dem Stromkreis 18 zuführt, während eine dritte Vorrichtung 10 (rechte Vorrichtung der Figur 3) sich bereits relativ am Ende des Entspannungsvorganges befindet und im Wesentlichen zeitgleich mit dem Beginn des Expansionsvorganges der ersten Vorrichtung den Entspannungsvorgang und damit ein Einspeisen von elektrischer Energie in das Stromnetz 18 bzw. den Stromkreis 18 abgeschlossen hat.

Demzufolge wird vorteilhaft dem Stromkreis 18 im Wesentlichen eine vergleichbar große Menge an Energie zugeführt, wie diesem auch wieder entzogen wird.

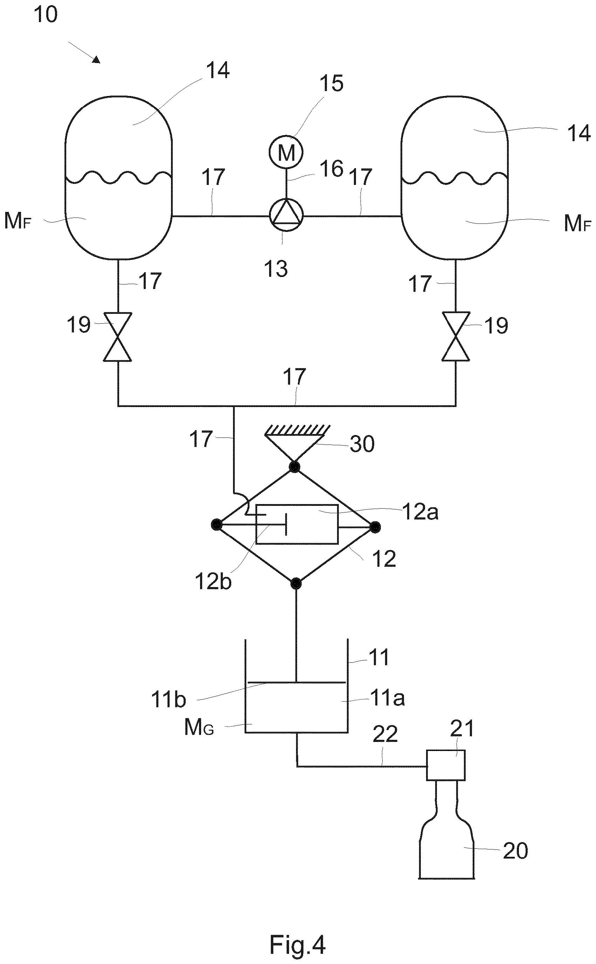

Die in der Fig.4 gezeigte Prinzipskizze verdeutlicht eine zweite Ausführungsform der erfindungsgemäßen Vorrichtung 10, wobei vergleichbar zu den Figuren 2a - 3 auch die Vorrichtung 10 der Figur 4 eine Aktoreinrichtung 12 sowie eine damit in Wirkverbindung stehende Verdichterkolbeneinrichtung 11 aufweist. Zudem sind zwei Vorratsbehältnisse 14 mit darin befindlichem hydraulischem Medium M_{F} gezeigt, wobei beide Vorratsbehältnisse 14 mit zumindest einer Pumpeneinrichtung 13 über entsprechende Verbindungsleitungen 17 in FluidVerbindung stehen. Die Pumpeneinrichtung 13 ist wiederum mit einer Antriebsmaschine 15, welche entweder als Antriebsmotor oder als Antriebsgenerator arbeitet, zumindest zeitweise und zumindest teilweise mechanisch über beispielsweise eine Welle 16 miteinander verbunden. Mit Hilfe der Pumpe 13 kann zwischen den beiden Vorratsbehältern 14 ein Druckunterschied hergestellt werden.

Des Weiteren sind in der Fig.4 zwei Ventileinrichtungen 19 gezeigt, welche zwischen den jeweiligen Vorratsbehältnissen 14 und der Aktoreinrichtung 12 an einer entsprechenden Verbindungsleitung 17 angeordnet sind.

Die Aktoreinrichtung 12 weist gemäß Fig.4 einen Aktormediumraum 12a zur Aufnahme eines hydraulischen bzw. flüssigen und fließfähigen Mediums M_{F}, sowie ein Aktorkolbenelement 12b, welches vornehmlich durch das in den Aktormediumraum 12a eingebrachte hydraulische Medium M_{F} innerhalb zumindest definierter Bewegungsgrenzen bewegt wird, auf.

Die Aktoreinrichtung 12 ist vorzugsweise mittels zumindest einer entsprechenden Lagerungseinrichtung 30 innerhalb der Vorrichtung 10 bevorzugt beabstandet von der Verdichterkolbeneinrichtung 11 und den Vorratsbehältnissen 14, sowie der Antriebsmaschine 15, der Pumpeneinrichtung 13 und den Ventileinrichtungen 19 gelagert.

Es ist jedoch auch denkbar, dass die Aktoreinrichtung 12 oder insbesondere das Aktorkolbenelement 12b ein Bestandteil der Verdichterkolbeneinrichtung 11 und insbesondere des Kolbenelementes 11 b ist, so dass durch eine Verdrängung bzw. Bewegung des Aktorkolbenelementes 12b direkt auch eine Bewegung des Kolbenelementes 11 b der Verdichterkolbeneinrichtung 11 und andersherum stattfindet, ohne dass etwaige Verbindungelement oder signalübertragungsfähige Leitungen zwischen den einzelnen Elementen 11 b, 12b angeordnet bzw. geschalten sein müssen.

Des Weiteren ist eine Blasdüse 21 aufgezeigt, welches vorzugsweise zumindest teilweise derart auf dem Mündungsbereich des zu expandierenden Behältnisses aufgebracht wird, um zum einen ein Entweichen des pneumatischen bzw. gasförmigen Mediums M_{G} während des Expansionsvorganges, jedoch auch während des Entspannungsvorganges zu verhindern und zum anderen ein Einbringen des pneumatischen Mediums M_{G} in den Innenbereich der Blasform (hier nicht gezeigt) und damit in den Innenbereich des zu expandierenden Behältnisses 20 zu ermöglichen. Zumindest abschnittsweise erstreckt sich in diese Blasdüse eine weitere Verbindungsleitung 22 zum Transportieren des pneumatischen Mediums M_{G}, welche eine Verbindung zwischen der Verdichterkolbeneinrichtung 11 und dem zu expandierenden Behältnis 20, welches bevorzugter Weise innerhalb einer hier nicht gezeigten Blasform angeordnet ist, herstellt, damit das komprimierte pneumatische Medium M_{G} aus dem Verdichtungsraum 11 a der Verdichterkolbeneinrichtung 11 der Blasform und damit dem Vorformling bzw. dem Behältnis 20 übertragen werden kann.

Die Vorgehensweise bezüglich des Expansionsvorganges beziehungsweise des Entspannungsvorganges ist im Wesentlichen identisch zu den bereits oben in den Figuren 2a bis 3 erläuterten Darstellungen. Demnach wird während eines Expansionsvorganges die antriebsmaschine 15 aktiviert und insbesondere beispielsweise deren Rotor (hier nicht gezeigt) in Rotation versetzt, so dass auch die mit der Antriebsmaschine 15 gekoppelte Pumpeneinrichtung 13 aktiviert wird und ein in den Vorratsbehältnissen 14 gelagertes hydraulisches Medium über Verbindungsleitungen 17 durch Ventileinrichtungen 19 hindurch zu der Aktoreinrichtung 12 und insbesondere in den Aktormediumraum 12a hinein transportiert. Es wird jedoch darauf hingewiesen, dass die Antriebsmaschine bei der in Fig. 4 gezeigten Ausführungsform auch unabhängig von dem Expansionsvorgang arbeiten bzw. laufen kann.

Der Expansionsvorgang kann bei der in Fig. 4 gezeigten Ausführungsform durch ein Öffnen eines Ventils 19 gestartet werden und insbesondere desjenigen Ventils 19, welches den Vorratsbehälter mit dem höheren Druckniveau öffnet. Das andere Ventil 19 bleibt bevorzugt geschlossen.

Das sich im Aktormediumraum 12a ausbreitende und den Raum 12a im Wesentlichen kontinuierlich ausfüllende hydraulische Medium M_{F} verschiebt dadurch folglich das Aktorkolbenelement 12b innerhalb des Aktormediumraumes 12a, wodurch ein vorzugsweise mit dem Aktorkolbenelement 12b verbundenes bzw. in Wirkverbindung stehendes Kolbenelement 11 b der Verdichterkolbeneinrichtung 11 im Wesentlichen zeitgleich mit dem Aktorkolbenelement 12b bewegt wird und sich derart in einen Verdichtungsraum 11a hinein bewegt, dass das darin befindliche pneumatische bzw. gasförmige Medium M_{G} komprimiert wird und in komprimiertem bzw. unter Druck befindlichem Zustand über zumindest eine Verbindungsleitung 22 den Verdichtungsraum 11 a in Richtung des zu expandierenden Behältnisses 20 verlässt, um dieses aufzublasen bzw. zu expandieren.

Nach dem Expansionsvorgang, d.h. nachdem das Behältnis im Wesentlichen vollständig expandiert bzw. aufgeblasen ist, folgt der Entspannungsvorgang, während dessen sich das in dem Behältnis 20 befindliche pneumatische Medium M_{G} wieder aus dem Behältnis 20 hinaus, über die Verbindungsleitung 22 in Richtung der Verdichterkolbeneinrichtung 11 bewegt. Dies wird beispielsweise dadurch ermöglicht, dass die Antriebsmaschine 15 die Pumpeneinrichtung 13 aufgrund einer Deaktivierung der Antriebsmaschine 15 nicht mehr antreibt, so dass kein weiteres hydraulisches Medium M_{F} aus zumindest einem der aufgezeigten beiden Vorratsbehältnissen 14 in die Aktoreinrichtung 12 eingebracht wird, wodurch ein definierter Druck auf das Kolbenelement 11 b ausgeübt wird Es ist jedoch auch möglich und bevorzugt, dass die Antriebsmaschine weiter läuft. Bevorzugt wird hier der obige Effekt dadurch erreicht, dass das Ventil 19 welches mit dem Voratsbehälter mit hohem Druckniveau verbunden ist, geschlossen wird. Anschließend wird das Ventil 19 mit der Verbindung zum Druckbehälter mit niedrigem Drucknivau geöffnet.

Demzufolge wird das Kolbenelement 11 b nun aufgrund des Drucks des aus dem Behältnis 20 strömenden pneumatischen Mediums M_{G} wieder aus der Verdichtungskammer 11a hinaus gedrückt, so dass sich die Verdichtungskammer 11 a wieder mit pneumatischem Medium M_{G} füllen kann. Durch die rückläufige Bewegung des Kolbenelementes 11 b wird auch das zuvor durch das in dem Aktormediumraum 12a strömende Medium M_{F} bewegte Aktorkolbenelement 12b wieder in entgegengesetzter Richtung bewegt, so dass folglich das in dem Aktormediumraum 12a befindliche hydraulische Medium M_{F} wieder über zumindest eine der Verbindungsleitungen 17 zurück - durch zumindest eine der Ventileinrichtungen 19 hindurch - in zumindest eines der Vorratsbehältnisse 14 transportiert wird. So wäre es denkbar, dass durch den Volumenstrom des zurückfließenden hydraulischen Mediums M_{F} auch die Pumpeneinrichtung 13 in Form eines Fluidmotors betrieben wird, wodurch die mit der Pumpeneinrichtung 13 gekoppelte Antriebsmaschine 15 in Form eines Antriebsgenerators angetrieben wird und elektrische Energie erzeugt, welche in einen entsprechenden Zwischenkries (hier nicht gezeigt) eines angeordneten Stromkreises (hier nicht gezeigt) eingespeist werden kann. Es wäre jedoch auch denkbar und bevorzugt, dass die Pumpeneinrichtung 13 das Fluid von einem niedrigen Druckniveau in dem einem Behälter auf ein hohes Druckniveau in dem anderen Behälter pumpt.

Durch die Einspeisung von elektrischer Energie findet eine Energierückgewinnung statt, durch welche ein kostengünstiger Betrieb einer Behältnisbehandlungsvorrichtung, wie einer Blasvorrichtung zum Blasen bzw. Streckblasen bzw. Expandieren eines Vorformlings zu einem Behältnis ermöglicht wird.

Durch die direkte Anordnung der Verdichtungseinheit an der Blasform kann eine adiabate Verdichtung umgesetzt werden. Diese ist viel effektiver als eine dezentrale Kompressoreinheit bzw. eine isotherme Kompression. Bei der in den Fig. 2 und 3 gezeigten Ausführungsform wird die Energie in einen Zwischenkreis zurückgespeist, bei der in Fig. 4 gezeigten Ausführungsform in einen mit Druck beaufschlagten Fluidbehälter. Auch eine Kombination aus beiden Verfahren ist denkbar.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Blasform;
- 1a, 1b: Blasformhälfte;
- 2a, 2b: Kavität
- 3: oberer Bereich
- 10: Vorrichtung
- 11: Verdichterkolbeneinrichtung
- 11a: Verdichtungsraum
- 11b: Kolbenelement
- 12: Aktoreinrichtung
- 12a: Aktormediumraum
- 12b: Aktorkolbenelement
- 13: Pumpeneinrichtung
- 14: Vorratsbehältnis
- 15: Antriebsmaschine
- 16: Welle
- 17: Verbindungsleitung für hydraulisches Medium
- 18: Stromkreis mit Zwischenkreis und Kondensator
- 19: Ventileinrichtung
- 20: Behältnis
- 21: Blasdüse
- 22: Verbindungsleitung für pneumatisches Medium
- M_{F}: hydraulisches Medium//flüssiges Medium
- M_{G}: pneumatisches Medium/gasförmiges Medium

## Patentansprüche

1. Vorrichtung (10) zum Expandieren von Vorformlingen zu Behältnissen (20) innerhalb einer Blasform (1) mittels eines unter Druck befindlichen pneumatischen Mediums (M_{G}), wobei eine Verdichterkolbeneinrichtung (11) zum Verdichten des pneumatischem Mediums (M_{G}) mit der Blasform (1) in Strömungsverbindung steht, um einen Volumenstrom des pneumatischen Mediums (M_{G}) in einen Innenbereich der Blasform (1) einzubringen, **dadurch gekennzeichnet, dass**
eine durch ein hydraulisches Medium (M_{F}) aktivierbare Aktoreinrichtung (12) mit zumindest einem Element der Verdichterkolbeneinrichtung (11) wechselwirkt, um während eines Expansionsvorganges des Behältnisses (20) die Verdichterkolbeneinrichtung (11) zur Verdichtung des pneumatischen Mediums (M_{G}) anzutreiben und um während eines dem Expansionsvorgang zeitlich nachfolgenden Entspannungsvorgangs aufgrund des zurückfließenden Volumenstroms des pneumatischen Mediums (M_{G}) in die Verdichterkolbeneinrichtung (11) selbst angetrieben zu werden, wobei durch eine Bewegung eines Aktorkolbenelementes auch das mit diesem Aktorkolbenelement in Wirkverbindung stehende Kolbenelement der Verdichterkolbeneinrichtung bewegt wird, und wobei die Aktoreinrichtung (12) selbst ein Aktorkolbenelement (12b) und einen Aktormediumraum (12a) aufweist, innerhalb welchem ein hydraulisches Medium (MF) eingebracht ist, um das Aktorkolbenelement (12b) derart zu bewegen, dass durch die Bewegung des Aktorkolbenelementes (12b) auch das mit diesem Aktorkolbenelement (12b) in Wirkverbindung stehende Kolbenelement der Verdichterkolbeneinrichtung bewegt wird, so dass während eines Expansionsvorganges des zu expandierenden Behältnisses das Kolbenelement der Verdichterkolbeneinrichtung (1) ein in einem Verdichtungsraum (11a) der Verdichterkolbeneinrichtung (1) befindliches pneumatisches Medium komprimiert, welches dann an die Blasform (1) übertragen wird.

2. Vorrichtung gemäß Anspruch 1,
**dadurch gekennzeichnet, dass**
zumindest ein ein hydraulisches Medium (M_{F}) aufweisendes Vorratsbehältnis (14) über wenigstens eine Verbindungsleitung (17) mit der Aktoreinrichtung (12) verbunden ist, um der Aktoreinrichtung (12) zumindest zeitweise und zumindest teilweise das hydraulische Medium (M_{F}) zur Verfügung zu stellen.

3. Vorrichtung gemäß Anspruch 2 ,
**dadurch gekennzeichnet, dass**
zumindest eine Pumpeneinrichtung (13) mit dem Vorratsbehältnis (14) in Wirkverbindung steht, um zumindest zeitweise einen Transport des hydraulischen Mediums (M_{F}) aus dem Vorratsbehältnis (14) zu der Aktoreinrichtung (12) zu bewirken.

4. Vorrichtung gemäß Anspruch 3,
**dadurch gekennzeichnet, dass**
zumindest eine Antriebsmaschine (15) mit der Pumpeneinrichtung (13) wirkverbunden ist, um die Pumpeneinrichtung (13) anzutreiben und/oder von der aktivierten Pumpeneinrichtung (13) angetrieben oder entlastet zu werden.

5. Vorrichtung gemäß Anspruch 4,
**dadurch gekennzeichnet, dass**
die Antriebsmaschine (15) wechselweise als ein elektrischer Antriebsmotor und als ein elektrischer Antriebsgenerator wirkt.

6. Vorrichtung gemäß einem der Ansprüche 4 oder 5,
**dadurch gekennzeichnet, dass**
eine Steuerungseinrichtung mit der Antriebsmaschine (15) und/oder zumindest einer zwischen dem Vorratsbehältnis (14) und der Aktoreinrichtung (12) angeordneten Ventileinrichtung (19) signalübertragungstechnisch verbunden ist, um die Antriebsmaschine (15) und/oder die Ventileinrichtung (19) zumindest zeitweise bedarfsgerecht anzusteuern.

7. Vorrichtung gemäß einem der vorangegangenen Ansprüche,
**dadurch gekennzeichnet, dass**
die Vorrichtung (10) ein elektrisches Speichermittel, insbesondere zum Speichern von von der Antriebsmaschine (15) erzeugter elektrischer Energie aufweist.

8. Verfahren zum Expandieren von Vorformlingen zu Behältnissen (20) innerhalb einer Blasform (1) mittels eines unter Druck befindlichen pneumatischen Mediums (M_{G}),
**dadurch gekennzeichnet, dass**
während eines Expansionsvorganges zum Expandieren des Behältnisses (20) eine Verdichterkolbeneinrichtung (11) zum Verdichten des pneumatischen Mediums (M_{G}) durch eine mit einem hydraulischen Medium (M_{F}) betriebene und mit zumindest einem Element der Verdichterkolbeneinrichtung (11) wechselwirkende Aktoreinrichtung (12) angesteuert wird, um das pneumatische Medium (M_{G}) in einen Innenbereich der Blasform (1) zu transportieren und, dass
während eines dem Expansionsvorgang nachfolgenden Entspannungsvorgangs das pneumatische Medium (M_{G}) in die Verdichterkolbeneinrichtung (11) zurückgeführt wird, wodurch die Aktoreinrichtung (12) zu einer Rückführung des hydraulischen Mediums (M_{F}) veranlasst wird, wobei durch die Bewegung eines Aktorkolbenelementes auch das mit diesem Aktorkolbenelement in Wirkverbindung stehende Kolbenelement der Verdichterkolbeneinrichtung bewegt wird, und wobei die Aktoreinrichtung (12) selbst ein Aktorkolbenelement (12b) und einen Aktormediumraum (12a) aufweist, innerhalb welchem ein hydraulisches Medium (MF) eingebracht ist, um das Aktorkolbenelement (12b) derart zu bewegen, dass durch die Bewegung des Aktorkolbenelementes (12b) auch das mit diesem Aktorkolbenelement (12b) in Wirkverbindung stehende Kolbenelement der Verdichterkolbeneinrichtung bewegt wird, so dass während eines Expansionsvorganges des zu expandierenden Behältnisses das Kolbenelement der Verdichterkolbeneinrichtung (1) ein in einem Verdichtungsraum (11a) der Verdichterkolbeneinrichtung (1) befindliches pneumatisches Medium komprimiert, welches dann an die Blasform (1) übertragen wird.

9. Verfahren gemäß Anspruch 8,
**dadurch gekennzeichnet, dass**
während des Entspannungsvorgangs das hydraulische Medium (M_{F}) über wenigstens eine Verbindungsleitung (17) einer Pumpeneinrichtung (13) zugeführt wird, welche in Wirkverbindung mit einer Antriebsmaschine (15) steht.

10. Verfahren gemäß Anspruch 9,
**dadurch gekennzeichnet, dass**
die durch einen Volumenstrom des durchfließenden hydraulischen Mediums (M_{F}) aktivierte Pumpeneinrichtung (13) die Antriebmaschine (15) als Antriebsgenerator zur Erzeugung von elektrischer Energie antreibt und/oder das Fluid in einen unter Druck stehenden Behälter fördert.

11. Verfahren gemäß einem der Ansprüche 9 oder 10,
**dadurch gekennzeichnet, dass**
eine Steuerungseinrichtung die Antriebsmaschine (15) und/oder zumindest eine zwischen zumindest einem Vorratsbehältnis (14) zum Speichern des hydraulischen Mediums (M_{F}) und der Aktoreinrichtung (12) angeordnete Ventileinrichtung (19) ansteuert, um während des Expansionsvorganges ein Abführen des hydraulischen Mediums (M_{F}) aus dem Vorratsbehältnis (14) zu der Aktoreinrichtung (12) und während des Entspannungsvorgangs von der Aktoreinrichtung (12) zu dem Vorratsbehältnis (14) zu ermöglichen.

## Claims

1. Apparatus (10) for expanding preforms into containers (20) within a blow mould (1) by means of a pressurised pneumatic medium (M_{G}),
wherein
a compressor piston unit (11) for compressing the pneumatic medium (M_{G}) is in flow communication with the blow mould (1), in order to introduce a volume flow of the pneumatic medium (M_{G}) into an inner region of the blow mould (1),
**characterized in that**
an actuator unit (12) that can be activated by a hydraulic medium (M_{F}) interacts with at least one element of the compressor piston unit (11), in order to drive during an expansion process of the container (20) the compressor piston unit (11) in order to compress the pneumatic medium (M_{G}), and in order to be driven itself during a relaxation process that temporally follows the expansion process due to the returning volume flow of the pneumatic medium (M_{G}) into the compressor piston unit (11), wherein by a movement of an actuator piston element also a piston element of the compressor piston unit which is in operative connection with this actuator piston element is moved and wherein the actuator unit (12) itself comprises an actuator piston element (12b) and an actuator medium space (12a) within which a hydraulic medium (M_{F}) is introduced in order to move the actuator piston element (12b) in such a way that by a movement of the actuator piston element (12b) also the piston element of the compressor piston unit which is in operative connection with this actuator piston element (12b) is moved, so that during an expansion process of the container to be expanded the piston element of the compressor piston unit (11) compresses a pneumatic medium situated in a compression space (11 a) of the compressor piston unit (11) which is then transferred to the blow mould (1).

2. The apparatus as claimed in claim 1,
**characterised in that**
at least one storage container (14) containing a hydraulic medium (M_{F}) is connected to the actuator unit (12) via at least one connection line (17), in order to provide the hydraulic medium (M_{F}) to the actuator unit (12) at least intermittently and at least partially.

3. The apparatus as claimed in claim 2,
**characterised in that**
at least one pump unit (13) is in operative connection with the storage container (14), in order to effect, at least intermittently, a transport of the hydraulic medium (M_{F}) from the storage container (14) to the actuator unit (12).

4. The apparatus as claimed in claim 3,
**characterised in that**
at least one drive machine (15) is operatively connected to the pump unit (13), in order to drive the pump unit (13) and/or in order to be driven or relieved by the activated pump unit (13).

5. The apparatus as claimed in claim 4,
**characterised in that**
the drive machine (15) alternately acts as an electric drive motor and as an electric drive generator.

6. The apparatus as claimed in claim 4 or 5,
**characterised in that**
a control unit is connected to the drive machine (15) and/or to at least one valve unit (19) mounted between the storage container (14) and the actuator unit (12) in a signal-transferring manner, in order to control the drive machine (15) and/or the valve unit (19) at least intermittently in line with demand.

7. The apparatus as claimed in any one of the preceding claims,
**characterised in that**
the apparatus (10) includes an electric storage means, in particular for storing electric energy generated by the drive machine (15).

8. Method for expanding preforms into containers (20) within a blow mould (1) by means of a pressurised pneumatic medium (M_{G}),
**characterised in that**
during an expansion process for expanding the container (20), a compressor piston unit (11) for compressing the pneumatic medium (M_{G}) is controlled by means of an actuator unit (12) that is driven by a hydraulic medium (M_{F}) and interacts with at least one element of the compressor piston unit (11), in order to transport the pneumatic medium (M_{G}) into an inner region of the blow mould (1), and that
during a relaxation process that follows the expansion process, the pneumatic medium (M_{G}) is returned into the compressor piston unit (11), as a result of which the actuator unit (12) is caused to a return of the hydraulic medium (M_{F}), wherein by a movement of an actuator piston element also a piston element of the compressor piston unit which is in operative connection with this actuator piston element is moved and wherein the actuator unit (12) itself comprises an actuator piston element (12b) and an actuator medium space (12a) within which a hydraulic medium (M_{F}) is introduced in order to move the actuator piston element (12b) in such a way that by a movement of the actuator piston element (12b) also the piston element of the compressor piston unit which is in operative connection with this actuator piston element (12b) is moved, so that during an expansion process of the container to be expanded the piston element of the compressor piston unit (11) compresses a pneumatic medium situated in a compression space (11 a) of the compressor piston unit (11) which is then transferred to the blow mould (1).

9. The method as claimed in claim 8,
**characterised in that**
during the relaxation process, the hydraulic medium (M_{F}) is fed to a pump unit (13) via at least one connection line (17), wherein the pump unit (13) is in operative connection with a drive machine (15).

10. The method as claimed in claim 9,
**characterised in that**
the pump unit (13) activated by a volume flow of the hydraulic medium (M_{F}) therethrough drives the drive machine (15) as a drive generator for generating electric energy and/or delivers the fluid into a pressurised container.

11. The method as claimed in claim 9 or 10,
**characterised in that**
a control unit controls the drive machine (15) and/or at least one valve unit (19) provided between at least one storage container (14) for storing the hydraulic medium (M_{F}) and the actuator unit (12), in order to allow, during the expansion process, the hydraulic medium (M_{F}) to be discharged from the storage container (14) to the actuator unit (12), and during the relaxation process, from the actuator unit (12) to the storage container (14).

## Revendications

1. Dispositif (10) servant à expanser des préformes en des récipients (20) à l'intérieur d'un moule de soufflage (1) au moyen d'un milieu pneumatique (M_{G}) se trouvant sous pression,
dans lequel un système à piston compresseur (11) servant à compresser le milieu pneumatique (M_{G}) est en communication fluidique avec le moule de soufflage (1) afin d'introduire dans une zone intérieure du moule de soufflage (1) un flux volumique du milieu pneumatique (M_{G}),
**caractérisé en ce que**
un système actionneur (12) pouvant être activé par un milieu hydraulique (M_{F}) interagit avec au moins un élément du système à piston compresseur (11) afin d'entraîner, au cours d'une opération d'expansion du récipient (20), le système à piston compresseur (11) afin de compresser le milieu pneumatique (M_{G}) et afin d'être entraîné lui-même, au cours d'une opération de détente suivant de manière chronologique l'opération d'expansion, du fait du flux volumique de retour du milieu pneumatique (M_{G}) dans le système à piston compresseur (11), dans lequel l'élément de piston se trouvant en liaison fonctionnelle avec ledit élément de piston actionneur, du système à piston compresseur est déplacé également par un déplacement d'un élément de piston actionneur, et dans lequel le système actionneur (12) présente lui-même un élément de piston actionneur (12b) et un espace à milieu actionneur (12a), à l'intérieur duquel un milieu hydraulique (M_{F}) est introduit afin de déplacer l'élément de piston actionneur (12b) de telle manière que l'élément de piston, se trouvant en liaison fonctionnelle avec l'élément de piston actionneur (12b), du système à piston compresseur est également déplacé par le déplacement dudit élément de piston actionneur (12b) de sorte qu'au cours d'une opération d'expansion du récipient à expanser, l'élément de piston du système à piston compresseur (1) comprime un milieu pneumatique se trouvant dans un espace de compression (11a) du système à piston compresseur (1), lequel milieu est alors transféré au moule de soufflage (1).

2. Dispositif selon la revendication 1,
**caractérisé en ce que**
au moins un récipient de réservoir (14) présentant un milieu hydraulique (M_{F}) est relié au système actionneur (12) par l'intermédiaire au moins d'un conduit de liaison (17) afin de fournir au système actionneur (12) au moins de manière temporaire et au moins en partie le milieu hydraulique (M_{F}).

3. Dispositif selon la revendication 2,
**caractérisé en ce que**
au moins un système de pompage (13) se trouve en liaison fonctionnelle avec le récipient de réservoir (14) afin de provoquer au moins de manière temporaire un transport du milieu hydraulique (M_{F}) provenant du récipient de réservoir (14) en direction du système actionneur (12).

4. Dispositif selon la revendication 3,
**caractérisé en ce que**
au moins une machine d'entraînement (15) est reliée de manière fonctionnelle au système de pompage (13) afin d'entraîner le système de pompage (13) et/ou afin d'être entraînée ou déchargée par le système de pompage (13) activé.

5. Dispositif selon la revendication 4,
**caractérisé en ce que**
la machine d'entraînement (15) agit en alternance en tant qu'un moteur d'entraînement électrique et en tant qu'un générateur d'entraînement électrique.

6. Dispositif selon l'une quelconque des revendications 4 ou 5,
**caractérisé en ce que**
un système de commande est relié selon une technique de transmission de signaux à la machine d'entraînement (15) et/ou au moins à un système de soupape (19) disposé entre le récipient de réservoir (14) et le système actionneur (12) afin de piloter la machine d'entraînement (15) et/ou le système de soupape (19) au moins de manière temporaire selon les besoins.

7. Dispositif selon l'une quelconque des revendications précédentes,
**caractérisé en ce que**
le dispositif (10) présente un moyen de stockage électrique, en particulier servant à stocker de l'énergie électrique produite par la machine d'entraînement (15).

8. Procédé servant à expanser des préformes en des récipients (20) à l'intérieur du moule de soufflage (1) au moyen d'un milieu pneumatique (M_{G}) se trouvant sous pression,
**caractérisé en ce que**
au cours d'une opération d'expansion servant à expanser le récipient (20), un système à piston compresseur (11) servant à compresser le milieu pneumatique (M_{G}) est piloté par un système actionneur (12) fonctionnant avec un milieu hydraulique (M_{F}) et interagissant avec au moins un élément du système à piston compresseur (11) afin de transporter le milieu pneumatique (M_{G}) dans une zone intérieure du moule de soufflage (1), et **en ce que**
au cours d'une opération de détente suivant l'opération d'expansion, le milieu pneumatique (M_{G}) est ramené dans le système à piston compresseur (11), ce qui permet d'amener le système actionneur (12) à ramener le milieu hydraulique (M_{F}), dans lequel l'élément de piston, se trouvant en liaison fonctionnelle avec un élément de piston actionneur, du système à piston compresseur est également déplacé par le déplacement dudit élément de piston actionneur, et dans lequel le système actionneur (12) présente lui-même un élément de piston actionneur (12b) et un espace de milieu actionneur (12a), à l'intérieur duquel un milieu hydraulique (M_{F}) est introduit afin de déplacer l'élément de piston actionneur (12b) de telle manière que l'élément de piston, se trouvant en liaison fonctionnelle avec l'élément de piston actionneur (12b), du système à piston compresseur est également déplacé par le déplacement dudit élément de piston actionneur (12b) de sorte qu'au cours d'une opération d'expansion du récipient à expanser, l'élément de piston du système à piston compresseur (1) comprime un milieu pneumatique se trouvant dans un espace de compression (11a) du système à piston compresseur (1), lequel milieu est alors transféré au moule de soufflage (1).

9. Procédé selon la revendication 8,
**caractérisé en ce que**
au cours de l'opération de détente, le milieu hydraulique (M_{F}) est amené par l'intermédiaire au moins d'un conduit de liaison (17) à un système de pompage (13), qui se trouve en liaison fonctionnelle avec une machine d'entraînement (15).

10. Procédé selon la revendication 9,
**caractérisé en ce que**
le système de pompage (13) activé par un flux volumique du milieu hydraulique (MF) traversant, entraîne la machine d'entraînement (15) en tant que générateur d'entraînement servant à produire de l'énergie électrique et/ou refoule le fluide dans un contenant sous pression.

11. Procédé selon l'une quelconque des revendications 9 ou 10,
**caractérisé en ce que**
un système de commande pilote la machine d'entraînement (15) et/ou au moins un système de soupape (19) disposé entre au moins un récipient de réservoir (14) servant à stocker le milieu hydraulique (M_{F}) et le système actionneur (12) afin de permettre, au cours de l'opération d'expansion, une évacuation du milieu hydraulique (M_{F}) hors du récipient de réservoir (14) en direction du système actionneur (12) et au cours de l'opération de détente du système actionneur (12) en direction du récipient de réservoir (14).
